# EUROPÄISCHE PATENTANMELDUNG

(11) **EP 1 505 778 A2**
(43) Veröffentlichungstag der Anmeldung: **09.02.2005**
(21) Anmeldenummer: 04018706.4
(22) Anmeldetag: 06.08.2004
(51) Int. Cl.: H04L 12/437

(54) **Verfahren zur Kommunikation zweier mittels eines ersten Netzwerkes vernetzter Einheiten sowie zwei Einheiten miteinander verbindendes erstes Netzwerk**

(30) Priorität: 08.08.2003 DE 10336490
(71) Anmelder: Harman Becker Automotive Systems GmbH, 76307 Karlsbad (DE)
(72) Erfinder: Radnic, Mario, Dipl. Ing., 76571 Gaggenau (DE)
(74) Vertreter: Grünecker, Kinkeldey, Stockmair & Schwanhäusser Anwaltssozietät

(57) **Zusammenfassung**

Um ein erstes Netzwerk, das zwei Einheiten (D1, D2) miteinander verbindet, zu vereinfachen und um die Betriebssicherheit zu erhöhen, sind die beiden Einheiten (D1, D2) über zwei unidirektionale elektrische Leitungen (L1, L2) miteinander verbunden. Vorzugsweise sind die Sender (TX) und die Empfänger (RX) der beiden Einheiten (D1, D2) sowie die beiden unidirektionalen elektrischen Leitungen (L1, L2) als eine RS232-Schnittstelle (RS232) ausgebildet. Bei Ausfall des ersten Netzwerkes wird ein zweites Netzwerk an das erste Netzwerk angeschlossen, wobei die Schnittstelle (RS232) das erste Netzwerk emuliert.

## Beschreibung

Die Erfindung betrifft ein Verfahren zur Kommunikation zweier mittels eines ersten Netzwerkes miteinander verbundenen Einheiten.

Die Erfindung betrifft weiter ein Netzwerk, das zwei Einheiten miteinander verbindet.

Nach dem neuesten Stand der Technik ausgestattete Kraftfahrzeuge, wie z. B. PKW, Omnibusse oder LKW, sind mit einer Multimedia-Anlage ausgerüstet, die z. B. aus einem ringförmigen MOST-Netzwerk aufgebaut ist, das mehrere Einheiten miteinander vernetzt, die je nach Bedarf als Datenquelle, Datensenke oder Transceiver funktionieren. So kann ein MOST-Netzwerk in einem Kraftfahrzeug beispielsweise einen Rundfunkempfänger, einen Fernsehempfänger, Bildschirme, einen CD-Spieler, einen DVD-Spieler oder einen CD-Wechsler, einen Kassettenrecorder, aktive Lautsprecher, eine Navigationsanlage, ein Autotelefon, ein schnurloses Telefon sowie Bedien- und Steuereinheiten miteinander vernetzen, um nur einige der zahlreichen Beispiele für die Einheiten zu nennen, die meist über einen optischen Datenbus miteinander vernetzt sind. Häufig kommt jedoch der Sonderfall vor, dass ein MOST-Netzwerk nur zwei Einheiten miteinander verbindet.

MOST, das als Abkürzung für Media Oriented System Transport oder Media Oriented Synchronous Transfer steht, ist die Bezeichnung für ein Multimedianetzwerk und einen Standard, die speziell für den Einsatz in Kraftfahrzeugen entwickelt wurden, jedoch nicht auf diesen Einsatzbereich beschränkt sind.

Es ist daher Aufgabe der Erfindung, ein Verfahren zur Kommunikation in einem nur zwei Einheiten miteinander vernetzenden Netzwerk sowie ein nur zwei Einheiten miteinander vernetzendes Netzwerk ohne Einbußen an Leistungsmerkmalen zu vereinfachen und die Betriebssicherheit zu erhöhen.

Verfahrensmäßig wird diese Aufgabe mit den in Anspruch 1 angegebenen Merkmalen dadurch gelöst, dass die beiden Einheiten über zwei unidirektionale elektrische Leitungen miteinander verbunden werden, dass die Sender und die Empfänger der beiden Einheiten sowie die beiden unidirektionalen elektrischen Leitungen als eine Schnittstelle ausgebildet werden, dass bei Ausfall des ersten Netzwerkes ein zweites Netzwerk an das erste Netzwerk angeschlossen wird, wobei die Schnittstelle das erste Netzwerk emuliert.

Vorrichtungsmäßig wird diese Aufgabe mit den im Anspruch 7 angegebenen Merkmalen dadurch gelöst, dass die beiden Einheiten über zwei unidirektionale elektrische Leitungen miteinander verbunden sind, dass die Sender und die Empfänger der beiden Einheiten sowie die beiden unidirektionalen elektrischen Leitungen als eine Schnittstelle ausgebildet sind, dass bei Ausfall des ersten Netzwerkes ein zweites Netzwerk an das erste Netzwerk anschließbar ist, wobei die Schnittstelle das erste Netzwerk emuliert.

Durch die erfindungsgemäße Maßnahme, die beiden Einheiten mittels zweier unidirektionaler elektrischer Leitungen miteinander zu verbinden, sind in den beiden Einheiten keine optoelektronischen Wandler mehr erforderlich, was den Aufbau der Einheiten beträchtlich vereinfacht.

Durch die erfindungsgemäße Maßnahme, ein zweites Netzwerk vorzusehen und bei Ausfall des ersten Netzwerkes an das erste Netzwerk anzuschließen, wobei die Sender und die Empfänger der beiden Einheiten sowie die beiden unidirektionalen Leitungen als Schnittstelle ausgebildet sind, welche das erste Netzwerk emuliert, wird die Betriebssicherheit erheblich verbessert.

Das erste Netzwerk kann z.B. ein MOST-Netzwerk sein, während es sich beim zweiten Netzwerk um ein CAN-Netzwerk handeln kann. Ein CAN-Netzwerk ist ein als Zweidrahtsystem ausgebildeter Bus, der für den Einsatz in Kraftfahrzeugen entwickelt wurde.

Vorzugsweise sind die Sender und Empfänger der in den Einheiten vorgesehenen Mikrocomputer sowie die beiden unidirektionalen elektrischen Leitungen als eine RS232-Schnittstelle ausgebildet, in der ein Treiber zur Emulation aller benötigten MOST-Funktionen installiert ist.

Die physikalische Schicht ist bei der Erfindung auf eine serielle Verbindung reduziert, die den Kontrollkanal unterstützt. Eine Audioverbindung zwischen den beiden Einheiten ist daher über den Synchronenkanal nicht mehr möglich. Die Audiosignale liegen analog über die beiden unidirektionalen Leitungen an den Einheiten an. Neben dem bereits erwähnten Vorteil, dass keine opto-elektrischen Wandler mehr erforderlich sind, zeichnet sich die Erfindung noch durch zwei weitere Vorteile aus. Der optische Leiter wird durch zwei einfache elektrische Leitungen ersetzt. Der aufwendige und teure MOST-Controller-Chip wird ebenfalls eingespart.

Die Erfindung wird anhand der Figuren näher beschrieben und erläutert.

In der Zeichnung zeigen:
- Figur 1: ein Ausführungsbeispiel eines erfindungsgemäßen MOST-Netzwerkes,
- Figur 2: ein MOST-Netzwerk mit einem optischen Datenbus gemäß dem Stand der Technik,
- Figur 3: den Aufbau der Softwareschichten bei der Erfindung,
- Figur 4: den Aufbau der Softwareschichten bei dem in Figur 2 abgebildeten MOST-Netzwerk gemäß dem Stand der Technik und
- Figur 5: ein Flußdiagramm zur Erläuterung der Erfindung.

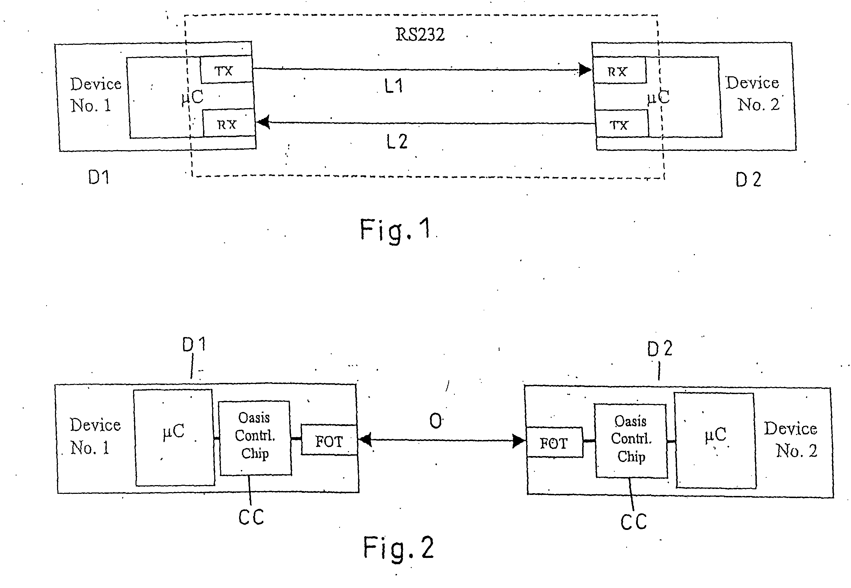

In Figur 1 ist ein Ausführungsbeispiel eines erfindungsgemäßen MOST-Netzwerkes gezeigt.

Zwei Einheiten D1 und D2 mit je einem Mikrocomputer µC, der mit einem Empfänger RX und einem Sender TX ausgerüstet ist, sind über zwei unidirektionale elektrische Leitungen L1 und L2 miteinander verbunden. Die Empfänger RX, die Sender TX sowie die beiden unidirektionalen Leitungen L1 und L2 sind als eine RS232-Schnittstelle ausgebildet.

In Figur 2 ist ein MOST-Netzwerk mit zwei mittels eines optischen Datenbusses miteinander verbundenen Einheiten gemäß dem Stand der Technik abgebildet.

Zwei Einheiten D1 und D2 sind über einen optischen Datenbus O miteinander verbunden. In jeder Einheit sind ein Mikrocomputer µC, ein Controllchip CC sowie ein opto-elektrischer Wandler FOT vorgesehen.

Die Erfindung zeichnet sich gegenüber diesem bekannten MOST-Netzwerk durch einen einfacheren Aufbau und einen günstigeren Preis aus, weil die Controllchips, die opto-elektrischen Wandler sowie der optische Datenbus durch eine preisgünstige und einfach aufgebaute RS232-Schnittstelle aus den Sendern TX und Empfängern RX der Mikrocomputer µC sowie aus zwei unidirektionalen elektrischen Leitungen L1 und L2 ersetzt sind.

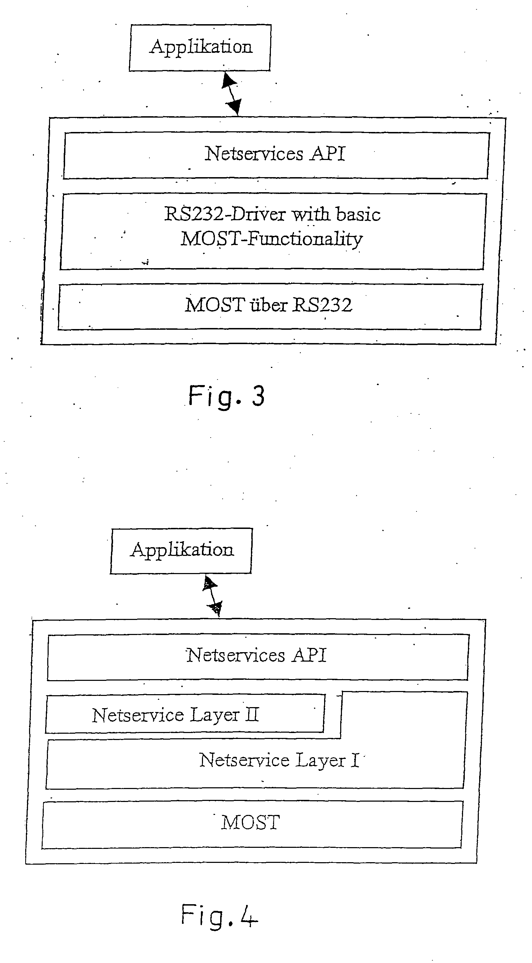

In Figur 3 ist der Aufbau der Softwareschichten der Erfindung gezeigt.

Über der MOST-Schicht befindet sich ein RS232-Treiber, der die Funktionen des MOST-Netzwerkes emuliert. Über diesem RS232-Treiber ist eine sogenannte Applikationsprotokollschnittstelle angeordnet, die unter dem englischen Begriff Application Protocol Interface und der englischen Abkürzung API bekannt ist.

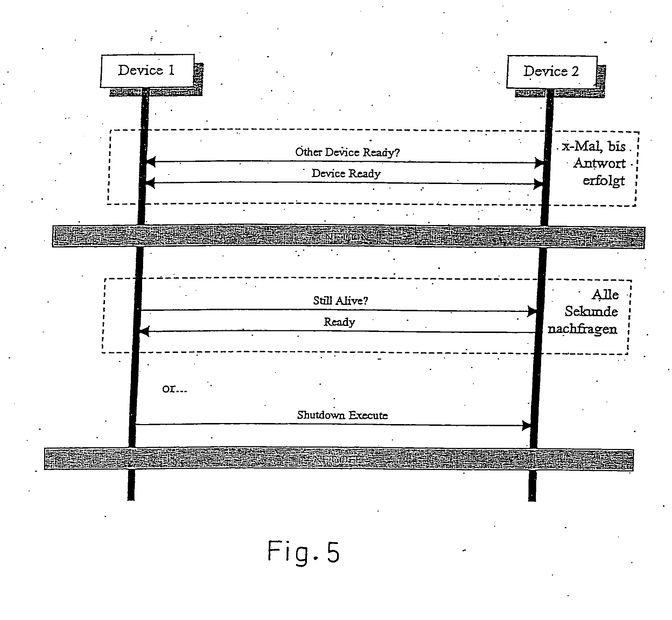

In Figur 4 ist der Aufbau der Softwareschichten des in Figur 2 bekannten MOST-Netzwerkes dargestellt.

Über der MOST-Schicht befinden sich zwei Netzschichten I und II, an die sich eine API-Schnittstelle anschließt. In den Schichten I und II sind die sogenannten Oasis-Netservices-Pakete eingebunden. Als weiteren Vorteil der Erfindung ist daher auch der einfachere Aufbau der Softwareschichten zu nennen.

In Figur 5 ist ein Flußdiagramm zur Erläuterung der Funktion des erfindungsgemäßen MOST-Netzwerkes dargestellt.

Zu Beginn des Betriebs fragt eine der beiden Einheiten D1 oder D2 die andere Einheit nach Bereitschaft ab. Nach Empfang einer Antwort der befragten Einheit bei der fragenden Einheit wird das Netzwerk eingeschaltet. Während des Betriebs fragt eine der beiden Einheiten in vorgebbaren Zeitabständen die andere Einheit nach ihrem Betriebszustand ab. Solange die befragte Einheit einen aktiven Betriebszustand an die fragende Einheit meldet, bleibt das Netzwerk eingeschaltet. Bleibt jedoch die Antwort der befragten Einheit aus oder meldet die befragte Einheit, dass sie nicht mehr aktiviert ist, so wird das Netzwerk ausgeschaltet.

Die Erfindung ist vorzugsweise für ein Fahrzeug geeignet. Es werden zwei Netzwerke, z.B. ein MOST-Netzwerk und ein CAN-Netzwerk, in ein Fahrzeug eingebaut. Im störungsfreien Betrieb ist das MOST-Netzwerk aktiv. Bei Ausfall des MOST-Netzwerkes übernimmt das CAN-Netzwerk die Aufgaben des MOST-Netzwerkes, das von der erfindungsgemäß vorgesehenen Schnittstelle emuliert wird.

### Bezugszeichenliste

- C: Controllchip
- D1: Einheit
- D2: Einheit
- FOT: opto-elektrischer Wandler
- L1: unidirektionale elektrische Leitung
- L2: unidirektionale elektrische Leitung
- O: optischer Datenbus
- RS232: RS232-Schnittstelle
- RX: Empfänger
- TX: Sender
- µC: Mikrocomputer

## Patentansprüche

1. Verfahren zur Kommunikation zweier mittels eines ersten Netzwerkes miteinander verbundenen Einheiten (D1, D2),
**dadurch gekennzeichnet, dass** die beiden Einheiten (D1, D2) über zwei unidirektionale elektrische Leitungen (L1, L2) miteinander verbunden werden, dass die Sender (TX) und die Empfänger (RX) der beiden Einheiten (D1, D2) sowie die beiden unidirektionalen elektrischen Leitungen (L1, L2) als eine Schnittstelle (RS232) ausgebildet werden, dass bei Ausfall des ersten Netzwerkes ein zweites Netzwerk an das erste Netzwerk angeschlossen wird, wobei die Schnittstelle (RS232) das erste Netzwerk emuliert.

2. Verfahren nach Anspruch 1,
**dadurch gekennzeichnet, dass** in der Schnittstelle (RS232) ein Treiber mit einer Treibersoftware installiert wird, welche alle benötigten Funktionen des ersten Netzwerkes emuliert.

3. Verfahren nach Anspruch 1 oder 2,
**dadurch gekennzeichnet, dass** die Schnittstelle (RS232) als RS232-Schnittstelle ausgebildet wird.

4. Verfahren nach Anspruch 1, 2 oder 3,
**dadurch gekennzeichnet, dass** für jede der beiden Einheiten (D1, D2) ein Mikrocomputer (µC) vorgesehen wird.

5. Verfahren nach einem der Ansprüche 1 bis 4,
**gekennzeichnet durch** folgende Verfahrensschritte:
1. Schritt:
Zur Initialisierung des ersten Netzwerkes fragt eine der beiden Einheiten (D1, D2) die andere Einheit (D2, D1) nach Betriebsbereitschaft ab;
2. Schritt:
Nach Empfang der Antwort der befragten Einheit bei der fragenden Einheit wird das erste Netzwerk eingeschaltet;
3. Schritt:
Während des Betriebs fragt eine der beiden Einheiten (D1, D2) den Betriebszustand der anderen Einheit (D2, D1) regelmäßig in vorgebbaren Zeitabständen ab;
4. Schritt:
Solange die befragte Einheit an die fragende Einheit meldet, dass sie aktiviert ist, bleibt das erste Netzwerk eingeschaltet;
5. Schritt:
Empfängt die fragende Einheit nach einer vorgebbaren Zeitspanne keine Antwort von der befragten Einheit oder die Meldung, dass sie, die befragte Einheit, nicht mehr aktiviert ist, wird das erste Netzwerk ausgeschaltet.

6. Verfahren nach einem der Ansprüche 1 bis 5,
**dadurch gekennzeichnet, dass** für das erste Netzwerk ein MOST-Netzwerk und für das zweite Netzwerk ein CAN-Netzwerk vorgesehen wird.

7. Netzwerk, das zwei Einheiten (D1, D2) miteinander verbindet,
**dadurch gekennzeichnet, dass** die beiden Einheiten (D1, D2) über zwei unidirektionale elektrische Leitungen (L1, L2) miteinander verbunden sind, dass die Sender (TX) und die Empfänger (RX) der beiden Einheiten (D1, D2) sowie die beiden unidirektionalen elektrischen Leitungen (L1, L2) als eine Schnittstelle (RS232) ausgebildet sind, dass bei Ausfall des ersten Netzwerkes ein zweites Netzwerk an das erste Netzwerk anschließbar ist, wobei die Schnittstelle (RS232) das erste Netzwerk emuliert.

8. Netzwerk nach Anspruch 7,
**dadurch gekennzeichnet, dass** die Schnittstelle (RS232) als RS232-Schnittstelle ausgebildet ist.

9. Netzwerk nach Anspruch 7 oder 8,
**dadurch gekennzeichnet, dass** in der Schnittstelle (RS232) ein Treiber mit einer Treibersoftware zur Emulation aller benötigten Funktionen des ersten Netzwerkes installiert ist.

10. Netzwerk nach Anspruch 7, 8 oder 9,
**dadurch gekennzeichnet, dass** für jede der beiden Einheiten (D1, D2) ein Mikrocomputer (µC) vorgesehen ist.

11. Netzwerk nach einem der Ansprüche 7 bis 10,
**dadurch gekennzeichnet, dass** über einer Schicht des ersten Netzwerkes eine RS232-Treiberschicht angeordnet ist, über der sich eine Applikationsschnittstelle befindet.

12. Netzwerk nach einem der Ansprüche 7 bis 11,
**dadurch gekennzeichnet, dass** das erste Netzwerk ein MOST-Netzwerk und das zweite Netzwerk ein CAN-Netzwerk ist.
